# EUROPÄISCHE PATENTSCHRIFT

(11) **EP 3 106 243 B1**
(45) Veröffentlichungstag und Bekanntmachung des Hinweises auf die Patenterteilung: **10.05.2017**
(21) Anmeldenummer: 16173972.7
(22) Anmeldetag: 10.06.2016
(51) Int. Cl.: B21J 15/02, B21D 39/03, B21J 15/36

(54) **MATRIZE FÜR EIN FÜGEWERKZEUG, INSBESONDERE ZUM DURCHSETZFÜGEN**
MATRIX FOR A JOINING TOOL, IN PARTICULAR FOR CLINCHING
MATRICE POUR UN OUTIL D'ASSEMBLAGE, EN PARTICULIER POUR CLINCHAGE

(30) Priorität: 16.06.2015 DE 102015007553
(43) Veröffentlichungstag der Anmeldung: 21.12.2016
(73) Patentinhaber: Eckold GmbH & Co. KG, 37444 St. Andreasberg (DE)
(72) Erfinder: Unger, Florian, 37431 Bad Lauterberg (DE)
(74) Vertreter: Rehmann, Thorsten

(56) Entgegenhaltungen:
- DE-A1- 10 332 124
- DE-A1-102010 020 666

## Beschreibung

Die Erfindung betrifft eine Matrize für ein Fügewerkzeug, insbesondere zum Durchsetzfügen, mit einem einen Boden eines Gesenks ausbildenden Amboss und einer den Amboss umgebenden Federhülse, die eine Mehrzahl Axialschlitze aufweist, durch die eine radiale Aufweitung der Federhülse ermöglicht wird.

Eine solche Matrize ist beispielsweise aus der DE 10 2010 020 666 A1 bekannt.

Das Gesenk wird bei dieser Matrize durch den Kopf des Ambosses und den darüber axial hinausstehenden Teil der Federhülse gebildet. Durch die geschlitzte Federhülse ist das Gesenk in radialer Richtung elastisch, sodass sich ein Prägeabschnitt einstellt, der in axialer Richtung höchste Kräfte aufnehmen kann. Die radiale Elastizität verhindert, dass beim Verbindungsvorgang zeitweise wirkende Tangentialspannungen auftreten, die zu einer Rissbildung führen können.

Um die radiale Nachgiebigkeit zu ermöglichen und gleichzeitig eine stabile Wandung des Gesenkes bilden zu können, muss die Federhülse aus einem hochwertigen und damit teuren Material hergestellt werden. Beim Stanzen unvermeidbarer Verschleiß an den Werkzeugen führt dazu, dass nach einer gewissen Betriebszeit zumindest die Federhülse ausgetauscht werden muss.

Die DE 103 32 124 A1 offenbart eine aus Stößel und Matrize bestehende Vorrichtung zum Verbinden von plattenförmigen Bauteilen, die dazu verwendet werden kann, Clinch- oder Stanznietverbindungen herzustellen. Bei der in dieser Vorrichtung ausgebildeten Matrize wird das Gesenk durch den Amboss und auf dem Amboss aufgesetzte radialnachgiebige Abstützelemente gebildet. Die Abstützelemente werden über elastische Elemente gehalten, die den Amboss umgeben. Durch die Stößelbewegung werden die miteinander zu verbindenden Bauteile streckgezogen, tiefgezogen und verpresst. Dabei fließt der Werkstoff radial nach außen und durch eine Teilung und die Nachgiebigkeit der Abstützungselemente werden diese auf einer Ebene nach radial außen verschoben. Nach Ausformung des Fügeelementes erfolgt der Rückhub des Stößels in die Ausgangsposition und die Abstützelemente werden nach dem Fügevorgang durch das elastische Element in ihre Ausgangsposition auf dem Kopf des Ambosses zurückgeschoben.

Bei einer Matrize, bei der auf den Kopf des Ambosses Abstützelemente aufliegen, bildet sich die Tiefe des Gesenks nicht erst während des Fügens aus, was dazu führt, dass das fließende Material beim Clinchen nicht langsam im Gesenk verteilt wird, sondern es muss sich allein durch die Stößelbewegung im Gesenk verteilen, wodurch unter Umständen keine hochwertige Verbindung erzeugt werden kann.

Die DE 297 02 834 U1 offenbart eine Vorrichtung zum Stanznieten mit einem Setzkopf, der mit einer elastischen Hülse versehen ist. Über den Setzkopf wird der Niet gesetzt. In der elastischen Hülse ist der Niet zentriert und nach dem Nietvorgang lösbar gehalten.

In der DE 30 01 671 A1 wird eine Matrize für eine Massivumformung im Kalt- oder Halbwarmverfahren aus einem Schrumpfverband mit einem einen Innenraum aufweisenden, ggf. längsgeteilten Matrizenkern oder einem oder mehreren Schrumpfringen beschrieben, in der zwischen dem Matrizenkern und wenigstens einem Schrumpfring eine Zwischenbuchse aus einem Material mit hoher Druckfestigkeit angeordnet ist, die wenigstens zwei voneinander abgesetzte, im Wesentlichen in Axialrichtung verlaufende Schlitze aufweist.

Aus der DE 102 21 247 A1 ist ein Werkzeug zum Durchsetzfügen bekannt, das aus einem zweiteiligen Stempel und einer zweiteiligen Matrize besteht. Ein Teil dient als Einsatzteil zur unmittelbaren Bearbeitung und der andere Teil als Aufnahmeteil zur Halterung. Die Einsatzteile bestehen aus einem härteren Material als die Aufnahmeteile.

Der Erfindung liegt die Aufgabe zugrunde, die aus der DE 10 2010 020 666 A1 bekannte Matrize dahingehend zu verbessern, dass die Standzeit erhöht und die Betriebskosten reduziert werden.

Zur Lösung dieser Aufgabe zeichnet sich eine gattungsgemäße Matrize durch eine zwischen dem Amboss und der Federhülse angeordnete Buchse aus, die an ihrem freien Ende mit Einsätzen versehen ist, die den Amboss umgeben und aus einem härteren Material bestehen als die Buchse.

Durch diese Ausgestaltung wird das Gesenk durch den Amboss und die den Amboss umgebende Buchse gebildet, wobei die Wandung des Gesenks durch die Einsätze ausgebildet ist, die aus dem härteren Material bestehen, und den Boden des Gesenks bildet der Kopf des Ambosses. Die Einsätze, die aus einem hochwertigen Material gefertigt werden können, unterliegen dem Verschleiß. Diese können ausgetauscht werden, ohne dass die Buchse und/oder die Federhülse ausgetauscht werden müssten, sodass hochwertiges Material verwendet werden kann um die Standzeit der Matrize zu erhöhen und die Kosten, die durch den dennoch nicht vermeidbaren Verschleiß entstehen, niedrig sind. Durch diese Ausgestaltung werden außerdem die Herstellkosten der Matrize reduziert, was die Wettbewerbsfähigkeit des Werkzeuges erhöht, weil nur die hochbelasteten Stellen des Gesenks aus einem harten Werkstoff bestehen. Vorzugsweise sind die Einsätze in einer von dem Amboss und der Buchse gebildeten Ringnut angeordnet.

Um die Einsätze in der Matrize gegen Herausfallen zu sichern ist jeder Einsatz vorzugsweise mit mindestens einem nach radial außen weisenden Vorsprung versehen, der in einen im Bereich des freien Endes der Hülse ausgebildeten Hinterschnitt eingreift.

Der Vorsprung kann in Umfangsrichtung über die volle Wandung eines Einsatzes verlaufen, also in Umfangsrichtung durchgängig ausgebildet sein.

Vorzugsweise ist der Amboss gegenüber der Buchse in Axialrichtung verschiebbar, wobei die Verschiebbarkeit gegen die Kraft einer Feder erfolgen kann oder durch einen hydraulischen Antrieb des Ambosses.

Vorzugsweise liegt die Buchse axial an einem Grundkörper der Matrize an, wozu der Grundkörper insbesondere vorzugsweise einen in Axialrichtung wirkenden Anschlag aufweist, der insbesondere weiterhin vorzugsweise zur Verdrehsicherung der Buchse mindestens einen in Axialrichtung hervorstehende Zapfen aufweist, der in eine entsprechende in der Buchse vorgesehene Ausnehmung eingreift.

Die Buchse kann auch einstückig mit dem Grundkörper ausgebildet sein. Auch eine einstückige Ausbildung des Ambosses mit dem Grundkörper ist möglich.

Mit Hilfe einer Zeichnung soll die Erfindung nachfolgend näher erläutert werden. Es zeigen:
- Figur 1 -: eine Matrize in perspektivischer Darstellung;
- Figur 2 -: die Matrize nach Figur 1 in einer weiteren perspektivischen Darstellung;
- Figur 3 -: die Seitenansicht der Matrize nach Figur 1;
- Figur 4 -: die Ansicht der Matrize gemäß Sichtpfeil IV nach Figur 3;
- Figur 5 -: einen Schnitt durch die Matrize ohne Federhülse;
- Figur 6 -: eine weitere Schnittdarstellung;
- Figur 7 -: die Ansicht der Matrize gemäß Sichtpfeil VII nach Figur 6;
- Figur 8 -: einen Schnitt durch die Matrize nach Figur 1;
- Figur 9 -: einen weiteren Schnitt durch die Matrize;
- Figur 10 -: die Ansicht der Matrize gemäß Sichtpfeil X nach Figur 9;
- Figur 11 -: eine vergrößerte Schnittdarstellung durch die Matrize;
- Figur 12 -: die Einzelheit XII nach Figur 11;
- Figur 13 -: den Schnitt entlang der Linie XIII-XIII nach Figur 14;
- Figur 13.1 -: Einzelheit XIII.1 nach Figur 13 in vergrößerter Darstellung;
- Figur 14 -: eine Draufsicht auf die Matrize;
- Figur 15 -: eine weitere perspektivische Darstellung der Matrize ohne Federhülse;
- Figur 16 -: einen Schnitt durch die Matrize nach Figur 15;
- Figur 17 -: einen weiteren Schnitt durch die Matrize nach Figur 15;
- Figur 18 -: die Matrize nach Figur 17 mit in Axialrichtung A verschobenem Amboss.

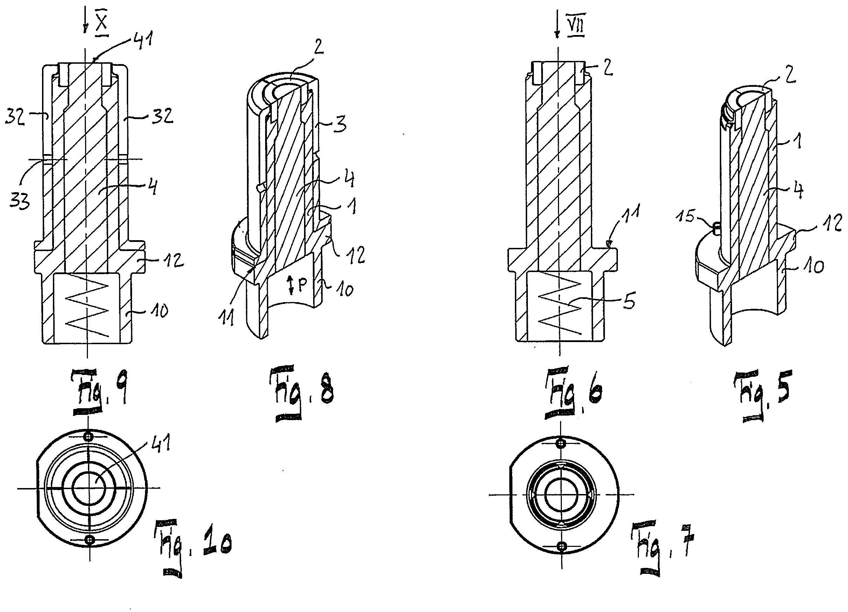

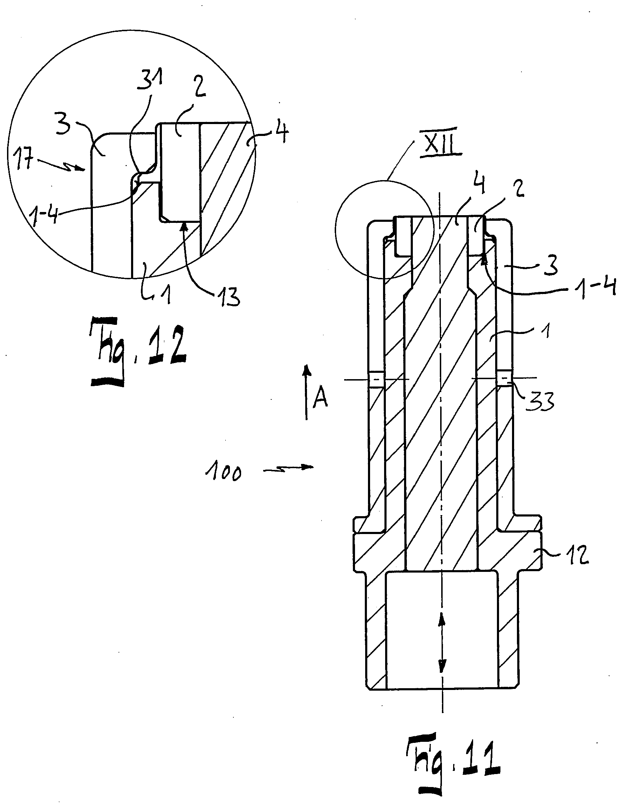

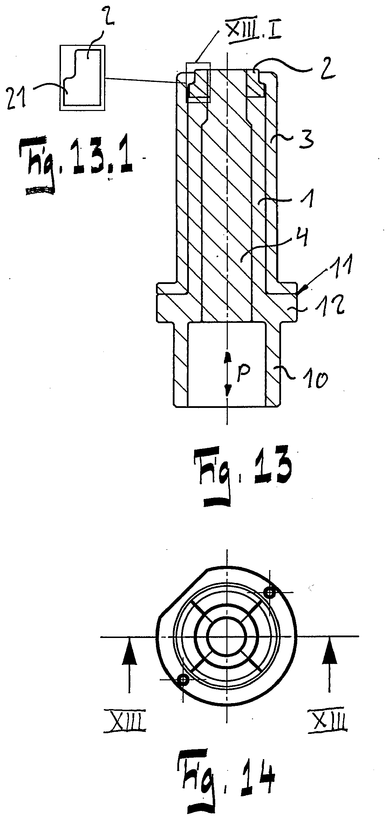

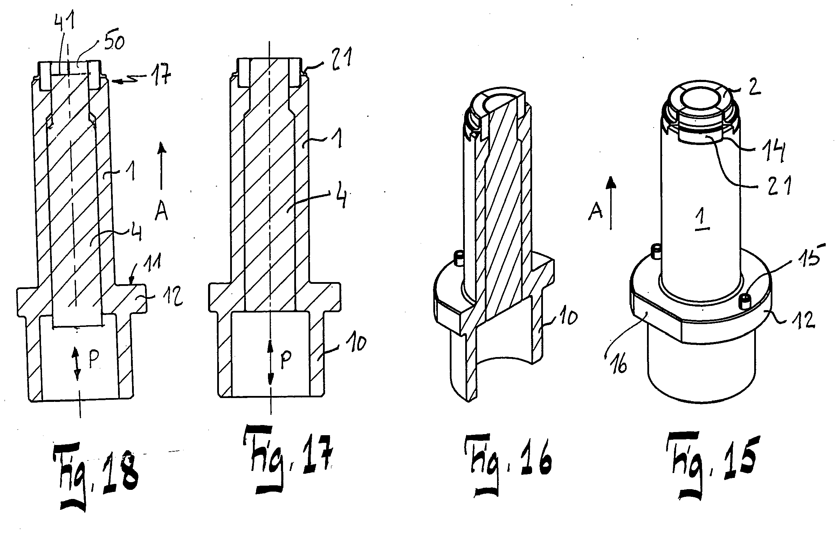

Der Aufbau der Matrize 100 ist gut aus Figuren 8 bis 13 ersichtlich. Sie besteht aus dem Grundkörper 10, der vorzugsweise einstückig mit dem Grundkörper 10 verbundenen Buchse 1 und der die Buchse 1 umgebenden Federhülse 3, die sich auf einem am Grundkörper 10 vorgesehenen Absatz 11 abstützt. Der Absatz 11 ist an einem umlaufenden Flansch 12 ausgebildet. Die Buchse 1 ist ein geschlossener Hohlzylinder und an ihrem dem Absatz 11 abgewandten Ende mit einer nach radial innen offenen Ausfräsung 13 versehen, die zusammen mit dem freien Ende 17 des Ambosses 4 eine umlaufende Ringnut 1-4 ausbildet, in die mehrere Einsätze 2 eingesetzt sind, die jeweils in der Draufsicht kreissegmentförmig ausgebildet sind. Die Anzahl der Einsätze 2 ist beliebig, vorzugsweise werden drei, vier oder fünf Einsätze 2 verwendet. Die Einsätze 2 sind, wie Figuren 13 und 15 zeigen, im Querschnitt L-förmig ausgestaltet, wobei der radiale Schenkel 21 nach radial außen weist und in einen Hinterschnitt 31 in der Federhülse 3 eingreift, wodurch eine Verliersicherung gebildet wird. Die Buchse 1 ist mit entsprechend der Anzahl der Einsätze 2 vorgesehenen Ausfräsungen 14 versehen, in denen der einen Vorsprung ausbildende radiale Schenkel 21 der Einsätze 2 geführt ist.

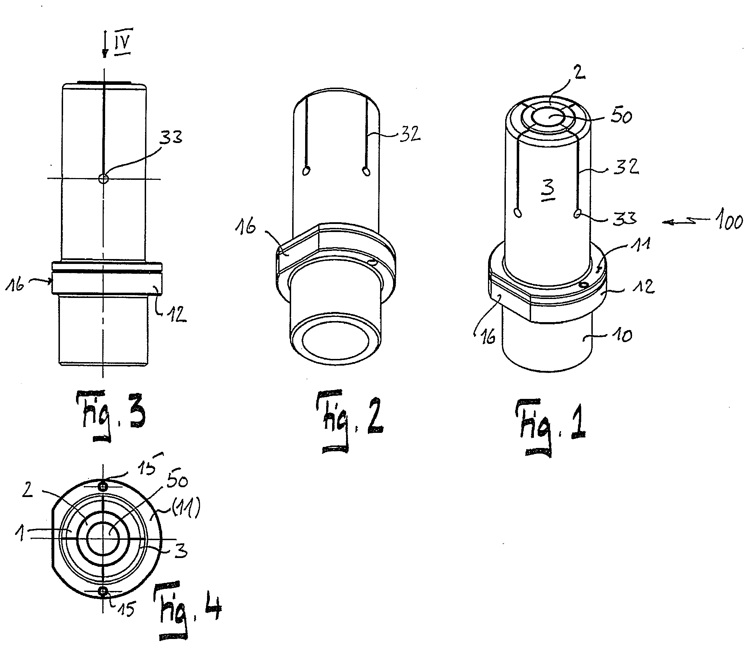

Der Flansch 12 ist mit in Axialrichtung A vorspringenden Zapfen 15 versehen, auf die die Federhülse 3 mit axialen Bohrungen (nicht gezeigt) aufgesetzt wird, sodass eine Verdrehsicherung zwischen der Federhülse 3 und dem Grundkörper 10 bzw. der Buchse 1 hergestellt wird. Die Federhülse 3 ist mit einer Mehrzahl in Axialrichtung A verlaufender Schlitzen 32 versehen, die in einem Loch 33 enden. Durch die Schlitze 32 ist der obere Bereich der Federhülse 3 in radialer Richtung elastisch. Der Teilungswinkel zwischen den Schlitzen 32 entspricht dem Kreissegment, das die Einsätze 2 bilden (vgl. Figur 1). Der Flansch 12 ist mit einer tangentialen Abflachung 16 versehen, die zur Verdrehsicherung der Matrize 100 im Stanzwerkzeug vorgesehen ist.

Der Amboss 4 ist im Grundkörper 10 in Axialrichtung A verschiebbar angeordnet, was durch den Doppelpfeil P angedeutet wird, und somit relativ zur Buchse 1 bewegbar. Zur Realisierung der axialen Verschiebbarkeit kann der Amboss 4 sich gegen eine im Grundkörper 10 vorgesehene Druckfeder 5 abstützen, er kann aber auch hydraulisch angetrieben sein (nicht gezeigt). Der Kopf 41 des Ambosses 4 bildet zusammen mit den Einsätzen 2 das Gesenk 50 aus (vgl. Figur 18). Die Einsätze 2 bestehen aus einem härteren Material als die Buchse 1. Für den Grundkörper 10 kann ein pulvermetallurgischer Stahl oder Werkzeugstahl verwendet werden. Für die Federhülse 3 wird vorzugsweise Federstahl eingesetzt. Die Härte bzw. Zähigkeit der Einsätze 2 kann in Abhängigkeit von dem zu fügenden Material eingestellt werden, bzw. entsprechend harte und zähe Einsätze werden ausgewählt. Die Matrize 100 ist besonders gut geeignet, zum Clinchen von Werkstoffen mit eingeschränkter Duktilität eingesetzt zu werden.

Die Federrate der Federhülse 3 wird über die Anzahl und Länge der Schlitze 32 eingestellt. Auch wenn in der Zeichnung der Amboss 4 in Axialrichtung A verschiebbar dargestellt ist, ist es gleichwohl möglich, den Amboss 4 einstückig mit dem Grundkörper 10 auszubilden. Die Buchse 1 und der Amboss 4 sind dann ein Bauteil, in dessen Kopf 41 eine axial eingefräste Ringnut vorgesehen ist, in die die Einsätze 2 eingesetzt werden, wobei die Tiefe der Ringnut kleiner ist als die Höhe der Einsätze 2, sodass diese mit dem Kopf 41 des Ambosses 4 das Gesenk 50 bilden (nicht gezeigt). Für die Einsätze 2 können ebenso wie für den Amboss 4 pulvermetallurgische Stähle, Werkzeugstahl, Hartmetalle oder Keramikwerkstoffe verwendet werden.

### Bezugszeichenliste

- 1: Buchse
- 1-4: Ringnut
- 2: Einsatz
- 3: Federhülse
- 4: Amboss
- 5: Feder
- 10: Grundkörper
- 11: Absatz
- 12: Flansch
- 13: Ausfräsung
- 14: Ausfräsung
- 15: Zapfen
- 16: Abflachung
- 17: freies Ende
- 21: radialer Schenkel / Vorsprung
- 31: Hinterschnitt
- 32: Schlitz
- 33: Loch
- 41: Boden
- 50: Gesenk
- 100: Matrize
- A: Axialrichtung
- P: Doppelpfeil

## Patentansprüche

1. Matrize (100) für ein Fügewerkzeug, insbesondere zum Durchsetzfügen, mit einem einen Boden (41) eines Gesenks (50) ausbildenden Amboss (4) und einer den Amboss (4) umgebenden Federhülse (3), die eine Mehrzahl in einer Axialrichtung (A) verlaufender Schlitze (32) aufweist, durch die eine radiale Aufweitung der Federhülse (3) ermöglicht wird, **gekennzeichnet durch** eine zwischen dem Amboss (4) und der Federhülse (3) angeordnete Buchse (1), die an ihrem freien Ende (17) mit Einsätzen (2) versehen ist, die den Amboss (4) umgeben und aus einem härteren Material bestehen als die Buchse (1).

2. Matrize (100) nach Anspruch 1, **dadurch gekennzeichnet, dass** die Einsätze (2) in einer von dem Amboss (4) und der Buchse (1) gebildeten Ringnut (1-4) angeordnet sind.

3. Matrize (100) nach Anspruch 1 oder 2, **dadurch gekennzeichnet, dass** jeder Einsatz (2) mindestens einen nach radial außen weisenden Vorsprung (21) aufweist, der in einen im Bereich des freien Endes (17) der Federhülse (3) ausgebildeten Hinterschnitt (31) eingreift.

4. Matrize (100) nach Anspruch 3, **dadurch gekennzeichnet, dass** der Vorsprung (21) in Umfangsrichtung durchgängig ausgebildet ist.

5. Matrize (100) nach einem der vorstehenden Ansprüche, **dadurch gekennzeichnet, dass** der Amboss (4) in Axialrichtung (A) gegenüber der Buchse (1) verschiebbar ist.

6. Matrize (100) nach Anspruch 5, **dadurch gekennzeichnet, dass** die Verschiebung des Ambosses (4) gegen die Kraft einer Feder (5) erfolgt.

7. Matrize (100) nach Anspruch 5, **dadurch gekennzeichnet, dass** der Amboss (4) hydraulisch antreibbar ist.

8. Matrize (100) nach einem der vorstehenden Ansprüche, **dadurch gekennzeichnet, dass** die Buchse (1) einstückig mit einem Grundkörper (10) ausgebildet ist.

9. Matrize (100) nach einem der Ansprüche 1 bis 4, **dadurch gekennzeichnet, dass** der Amboss (4) einstückig mit einem Grundkörper (10) ausgebildet ist.

10. Matrize (100) nach Anspruch 8, **dadurch gekennzeichnet, dass** der Grundkörper (10) einen in Axialrichtung (A) wirkenden Absatz (11) aufweist, an dem die Federhülse (3) anliegt.

11. Matrize (100) nach Anspruch 10, **dadurch gekennzeichnet, dass** der Absatz (11) zur Verdrehsicherung der Federhülse (3) mindestens einen in Axialrichtung (A) hervorstehenden Zapfen (15) aufweist, der in eine entsprechende in der Federhülse (3) vorgesehene Ausnehmung eingreift.

12. Matrize (100) nach Anspruch 3, **dadurch gekennzeichnet, dass** der Hinterschnitt (31) an der Federhülse (3) ausgebildet ist.

## Claims

1. Die (100) for a joining tool, in particular for clinching, with an anvil (4) forming a bottom (41) of a swage (50), and with a spring sleeve (3) which surrounds the anvil (4) and has a plurality of slits (32) extending in an axial direction (A), said slits (32) permitting a radial expansion of the spring sleeve (3), **characterized by** a bushing (1) which is arranged between the anvil (4) and the spring sleeve (3) and which is provided, at its free end (17), with inserts (2) which surround the anvil (4) and are made of a harder material than the bushing (1).

2. Die (100) according to Claim 1, **characterized in that** the inserts (2) are arranged in an annular groove (1-4) formed by the anvil (4) and the bushing (1).

3. Die (100) according to Claim 1 or 2, **characterized in that** each insert (2) has at least one radially outwardly pointing projection (21), which engages in an undercut (31) formed in the area of the free end (17) of the spring sleeve (3).

4. Die (100) according to Claim 3, **characterized in that** the projection (21) is continuous in the circumferential direction.

5. Die (100) according to one of the preceding claims, **characterized in that** the anvil (4) is displaceable in the axial direction (A) with respect to the bushing (1).

6. Die (100) according to Claim 5, **characterized in that** the displacement of the anvil (4) takes place counter to the force of a spring (5).

7. Die (100) according to Claim 5, **characterized in that** the anvil (4) can be driven hydraulically.

8. Die (100) according to one of the preceding claims, **characterized in that** the bushing (1) is formed in one piece with a main body (10).

9. Die (100) according to one of Claims 1 to 4, **characterized in that** the anvil (4) is formed in one piece with a main body (10).

10. Die (100) according to Claim 8, **characterized in that** the main body (10) has a shoulder (11) which acts in the axial direction (A) and on which the spring sleeve (3) bears.

11. Die (100) according to Claim 10, **characterized in that** the shoulder (11) has at least one peg (15) which protrudes in the axial direction (A) in order to secure the spring sleeve (3) in terms of rotation, which peg (15) engages in a corresponding recess provided in the spring sleeve (3).

12. Die (100) according to Claim 3, **characterized in that** the undercut (31) is formed on the spring sleeve (3).

## Revendications

1. Matrice (100) pour un outil d'assemblage, en particulier pour le clinchage, comportant une enclume (4) réalisant le fond (41) d'une étampe (50) et une douille élastique (3) qui entoure l'enclume (4) et qui présente une pluralité de fentes (32) s'étendant en direction axiale (A) et permettant un évasement radial de la douille élastique (3), **caractérisée par** un manchon (1) qui est agencé entre l'enclume (4) et la douille élastique (3) et qui, à son extrémité libre (17), est pourvu d'inserts (2) qui entourent l'enclume (4) et qui sont constitués d'un matériau plus dure que celui du manchon (1).

2. Matrice (100) selon la revendication 1, **caractérisée en ce que** les inserts (1) sont agencés dans une gorge annulaire (1-4) formée par l'enclume (4) et par le manchon (1).

3. Matrice (100) selon la revendication 1 ou 2, **caractérisée en ce que** chaque insert (2) présente au moins une saillie (21) dirigée radialement vers l'extérieur, qui vient s'engager dans une contre-dépouille (31) réalisée dans la zone de l'extrémité libre (17) de la douille élastique (3).

4. Matrice (100) selon la revendication 3, **caractérisée en ce que** la saillie (21) est réalisée en continu en direction périphérique.

5. Matrice (100) selon l'une des revendications précédentes, **caractérisée en ce que** l'enclume (4) est déplaçable en direction axiale (A) par rapport au manchon (1).

6. Matrice (100) selon la revendication 5, **caractérisée en ce que** le déplacement de l'enclume (4) s'effectue à l'encontre de la force d'un ressort (5).

7. Matrice (100) selon la revendication 5, **caractérisée en ce que** l'enclume (4) peut être entraînée par voie hydraulique.

8. Matrice (100) selon l'une des revendications précédentes, **caractérisée en ce que** le manchon (1) est réalisé d'un seul tenant avec un corps de base (10).

9. Matrice (100) selon l'une des revendications 1 à 4, **caractérisée en ce que** l'enclume (4) est réalisée d'un seul tenant avec un corps de base (10).

10. Matrice (100) selon la revendication 8, **caractérisée en ce que** le corps de base (10) comprend un talon (11) qui agit en direction axiale (A) et sur lequel prend appui la douille élastique (3).

11. Matrice (100) selon la revendication 10, **caractérisée en ce que** pour le blocage anti-rotation de la douille élastique (3), le talon (11) comprend au moins un ergot (15) qui dépasse en direction axiale (A) et qui s'engage dans un évidement correspondant prévu dans la douille élastique (3).

12. Matrice (100) selon la revendication 3, **caractérisée en ce que** la contre-dépouille (31) est réalisée sur la douille élastique (3).
